(19) Europäisches Patentamt
European Patent Office
Office européen des brevets

(11) **EP 4 254 270 A1**

(12) **DEMANDE DE BREVET EUROPEEN**

(43) Date de publication:
**04.10.2023   Bulletin 2023/40**

(21) Numéro de dépôt: **23163938.6**

(22) Date de dépôt: **24.03.2023**

(51) Classification Internationale des Brevets (IPC):
*G06N 3/04* (2023.01)        *G06N 3/08* (2023.01)
*G06N 20/20* (2019.01)      *G06V 20/58* (2022.01)
*G06N 3/0464* (2023.01)    *G06N 3/094* (2023.01)
*G06N 3/045* (2023.01)      *G06N 3/084* (2023.01)

(52) Classification Coopérative des Brevets (CPC):
**G06N 3/084; G06N 3/045; G06N 3/0464;
G06N 3/094; G06N 20/20; G06V 20/582;**
G06N 3/044

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**KH MA MD TN**

(30) Priorité: **29.03.2022   FR 2202821**

(71) Demandeur: **Commissariat à l'énergie atomique
et aux énergies alternatives**
**75015 Paris (FR)**

(72) Inventeurs:
• **ALLENET, Thibault**
  **91191 Gif sur Yvette Cedex (FR)**
• **BICHLER, Olivier**
  **91191 Gif sur Yvette Cedex (FR)**

(74) Mandataire: **Lavoix**
**2, place d'Estienne d'Orves**
**75441 Paris Cedex 09 (FR)**

(54) **PROCÉDÉ ET DISPOSITIF ÉLECTRONIQUE DE TRAITEMENT DE DONNÉE(S) PAR RÉSEAU(X) DE NEURONES AVEC RÉSISTANCE AMÉLIORÉE AUX ATTAQUES ADVERSES PAR APPROXIMATION DU GRADIENT, PROGRAMME D'ORDINATEUR ET SYSTÈME ÉLECTRONIQUE DE TRAITEMENT D'OBJET(S) ASSOCIÉS**

(57)    Ce procédé de traitement de donnée(s) est mis en oeuvre par un dispositif électronique de traitement, et comprend les étapes suivantes :
- acquisition (200) d'une donnée ;
- traitement (230) de la donnée via l'inférence d'un algorithme d'intelligence artificielle, préalablement entraîné lors d'un entrainement (100),
ledit algorithme comportant une pluralité de blocs distincts d'intelligence artificielle, chacun préalablement entrainé lors dudit entrainement,
le procédé comprenant, avant l'étape de traitement (230), les étapes suivantes :

- calcul (210) d'un code à partir de la donnée acquise ;
- sélection (220), en fonction du code calculé, d'un bloc parmi la pluralité de blocs d'intelligence artificielle,
l'étape de traitement (230) étant effectuée via l'inférence, parmi la pluralité de blocs d'intelligence artificielle, du seul bloc sélectionné,
la pluralité de blocs d'intelligence artificielle étant une pluralité de réseaux de neurones artificiels ou une pluralité de couches de traitement au sein d'un réseau de neurones artificiels.

FIG.4

**Description**

La présente invention concerne un procédé de traitement de donnée(s) mis en oeuvre par un dispositif électronique de traitement, ainsi qu'un tel dispositif électronique de traitement de donnée(s).

L'invention concerne aussi un système électronique de traitement d'objet(s), comprenant un capteur, tel qu'un capteur d'image(s), un capteur sonore ou encore un capteur de détection d'objets ; et un tel dispositif électronique de traitement, chaque donnée à traiter étant un signal issu du capteur.

L'invention concerne également un programme d'ordinateur comportant des instructions logicielles qui, lorsqu'elles sont exécutées par un ordinateur, mettent en oeuvre un tel procédé de traitement.

L'invention concerne alors le domaine des réseaux de neurones, c'est-à-dire des réseaux de neurones artificiels, ou ANN (de l'anglais *Artificial Neural Network*) connus en soi, et en particulier de l'inférence de tels réseaux, c'est-à-dire de leur mise en oeuvre, chaque réseau de neurones inféré ayant été préalablement entrainé avec des données d'entrainement, également appelé données d'apprentissage, c'est-à-dire ayant fait l'objet d'un apprentissage préalable avec de telles données d'apprentissage.

L'invention offre alors diverses applications, telles que la classification ou l'identification d'objets préalablement détectés par un capteur, permettant par exemple de reconnaître ou classer les identités de personnes dont le visage a été détecté par un détecteur de visages, ou encore de reconnaître ou de classer des objets environnants détectés par un capteur embarqué à bord d'un véhicule autonome, la reconnaissance ou encore la classification de tels objets étant importante pour la conduite autonome d'un tel véhicule.

D'autres applications concernent le traitement sonore de signaux issus de capteur sonore, en particulier pour la reconnaissance vocale.

L'invention concerne en particulier des applications liées à la sécurité biométrique, telles qu'une identification vocale, une identification faciale, une identification d'empreinte digitale, une application de robustesse au camouflage pour des analyses d'images aérienne, etc.

Les réseaux de neurones sont sensibles à de petites variations de l'entrée. Des attaques adverses peuvent alors exploiter cette vulnérabilité pour générer des entrées capables de tromper les réseaux de neurones, tout en étant indissociables des entrées d'origines par l'humain. La robustesse aux attaques adverses est alors un aspect important d'un algorithme d'intelligence artificielle comportant un réseau de neurones.

Les réseaux de neurones étant par nature différentiables pour permettre un apprentissage par rétropropagation du gradient, ils sont par construction sensibles aux attaques adverses. Même sans connaissance des paramètres du réseau, il est possible d'estimer numériquement le gradient pour construire une attaque.

Jusqu'à présent, face à de telles attaques adverses, les méthodes connues cherchent à améliorer la robustesse du réseau lors de son apprentissage, et l'article « Opportunities and Challenges in Deep Learning Adversarial Robustness: A Survey » de Silva et al, publié en 2020, présente de telles méthodes.

Cependant, ces méthodes restent assez vulnérables à des attaques reposant sur l'approximation numérique du gradient, et présentent en outre l'inconvénient que le gain en robustesse se fait généralement au compromis des performances.

Le but de l'invention est alors de proposer un procédé de traitement de donnée(s), et un dispositif électronique de traitement associé, permettant d'offrir une meilleure robustesse aux attaques adverses basées sur une estimation du gradient pour chercher à tromper un algorithme d'intelligence artificielle comportant un réseau de neurones.

A cet effet, l'invention a pour objet un procédé de traitement de donnée(s), mis en oeuvre par un dispositif électronique de traitement et comprenant les étapes suivantes :

- acquisition d'une donnée ;
- traitement de la donnée via l'inférence d'un algorithme d'intelligence artificielle, préalablement entraîné lors d'un entrainement préalable,

l'algorithme d'intelligence artificielle comportant une pluralité de blocs distincts d'intelligence artificielle, chacun ayant été préalablement entrainé lors de l'entrainement préalable, et

le procédé comprend, en outre et préalablement à l'étape de traitement, les étapes suivantes :

- calcul d'un code à partir de la donnée acquise ;
- sélection, en fonction du code calculé, d'un bloc parmi la pluralité de blocs d'intelligence artificielle,

l'étape de traitement étant alors effectuée via l'inférence, parmi la pluralité de blocs d'intelligence artificielle, du seul bloc d'intelligence artificielle sélectionné,
la pluralité de blocs d'intelligence artificielle étant une pluralité de réseaux de neurones artificiels ou bien une pluralité de couches de traitement au sein d'un réseau de neurones artificiels.

Avec le procédé de traitement selon l'invention, l'algorithme d'intelligence artificielle comporte plusieurs blocs distincts d'intelligence artificielle, et pour le traitement de chaque donnée respective via l'inférence de l'algorithme d'intelligence artificielle, un seul bloc parmi la pluralité de blocs d'intelligence artificielle est inféré, le bloc inféré étant sélectionné en fonction du code calculé à partir de la donnée acquise, c'est-à-dire de la donnée respective à traiter.

Cette sélection du bloc utilisé pour l'inférence parmi la pluralité de blocs d'intelligence artificielle inclus dans l'algorithme d'intelligence artificielle est alors effectuée d'une manière secrète, c'est-à-dire inconnue d'une potentielle attaque adverse. En outre, le bloc sélectionné pour l'inférence est susceptible de varier d'une donnée à l'autre.

Aussi, une attaque adverse cherchant à effectuer une approximation par essais successifs du gradient de l'algorithme d'intelligence artificielle mettra en oeuvre, lors de ces essais successifs, différents blocs d'intelligence artificielle parmi la pluralité de blocs d'intelligence artificielle inclus dans l'algorithme d'intelligence artificielle, et l'approximation obtenue du gradient sera alors nettement moins précise et moins fiable.

De plus, le code est calculé à partir d'au moins une partie de la donnée acquise par application d'une fonction déterministe. Pour une même donnée acquise, le bloc sélectionné sera alors toujours le même. Autrement dit, dans le cas d'une attaque adverse utilisant à de multiples reprises une même donnée d'entrée pour l'inférence de l'algorithme d'intelligence artificielle, le bloc sélectionné et faisant l'objet de cette attaque sera alors toujours le même au sein de la pluralité de blocs distincts d'intelligence artificielle formant l'algorithme d'intelligence artificielle.

Ainsi, le procédé de traitement selon l'invention offre une meilleure robustesse aux attaques adverses basées sur une approximation du gradient.

Suivant d'autres aspects avantageux de l'invention, le procédé de traitement comprend une ou plusieurs des caractéristiques suivantes, prises isolément ou suivant toutes les combinaisons techniquement possibles :

- lors de l'étape de calcul, le code est un haché, calculé par application d'une fonction de hachage à la donnée acquise ;
- la fonction de hachage est une fonction de hachage cryptographique ;
  la fonction de hachage étant de préférence choisie parmi le groupe consistant en : une fonction SHA (de l'anglais *Secure Hash Algorithm*), telle que la fonction SHA-256 ou la fonction SHA-515 ; et la fonction MD5 (de l'anglais *Message Digest 5*) ;
- le code calculé est un nombre ; et lors de l'étape de sélection, une opération de troncation vers une distribution de K éléments est appliquée au code calculé, et le bloc intelligence artificiel sélectionné est celui dont l'identifiant est égal au résultat de l'application de l'opération de troncation ; K représentant le nombre de blocs distincts d'intelligence artificielle et étant alors un entier supérieur ou égal à 2,

    l'opération de troncation étant en outre appliquée à la partie entière du code calculé, si le code calculé n'est pas un nombre entier ;
    l'opération de troncation étant de préférence une opération tronquant toute distribution uniforme vers une distribution uniforme de K éléments ;
    l'opération de troncation étant de préférence encore une opération modulo K ;

- lors de l'entrainement préalable, chaque bloc d'intelligence artificielle a été préalablement entrainé indépendamment du ou des autres blocs d'intelligence artificielle ;
- lors de l'entrainement préalable, la pluralité de blocs d'intelligence artificielle a été préalablement entrainée via une méthode d'apprentissage d'ensemble avec un objectif commun à la pluralité de blocs d'intelligence artificielle ;
  la méthode d'apprentissage d'ensemble étant de préférence choisie parmi le groupe consistant en : une méthode d'apprentissage d'ensemble adverse, une méthode d'apprentissage d'ensemble avec promotion d'une diversité des prédictions des réseaux, une méthode d'apprentissage d'ensemble avec promotion d'une diversité des réseaux via une régularisation sur les gradients de la donnée d'entrée ;
- chaque bloc d'intelligence artificielle est distinct du ou des autres blocs de la pluralité de blocs d'intelligence artificielle de par l'utilisation d'une méthode d'initialisation distincte d'un bloc à l'autre, lors de l'entrainement préalable ;
  chaque méthode d'initialisation étant de préférence choisie parmi le groupe consistant en : une méthode d'initialisation Xavier uniforme, et une méthode d'initialisation Kaiming uniforme ;
- chaque bloc d'intelligence artificielle est distinct du ou des autres blocs de la pluralité de blocs d'intelligence artificielle de par l'utilisation d'une fonction de coût distincte lors de l'entrainement préalable ;
  chaque fonction respective de coût étant de préférence choisie parmi le groupe consistant en : une fonction de coût d'entropie croisée ; une fonction de coût du mélange gaussien ; et une fonction de coût de Mahalanobolis maximale ;
- chaque bloc d'intelligence artificielle est distinct du ou des autres blocs de la pluralité de blocs d'intelligence artificielle de par l'utilisation d'une méthode d'entrainement distinct lors de l'entrainement préalable ;
  chaque méthode respective d'entrainement étant de préférence choisie parmi le groupe consistant en : une méthode d'apprentissage adverse ; une méthode basée sur des défenses certifiées ; et une méthode basée sur une approche de régularisation ;

- chaque bloc d'intelligence artificielle a une topologie basée sur un mécanisme d'apprentissage avec rétropropagation du gradient, distincte de la topologie respective du ou des autres blocs de la pluralité de blocs d'intelligence artificielle ; chaque topologie étant de préférence choisie parmi le groupe consistant en : une topologie basée sur un mécanisme de convolution, une topologie basée sur un mécanisme d'attention, une topologie basée sur un mécanisme de récurrence ;
- le nombre K de blocs d'intelligence artificielle est supérieur ou égal à 3 ; le nombre K de blocs d'intelligence artificielle étant de préférence compris entre 3 et 5 ;
- chaque donnée acquise correspond à un signal capté par un capteur ; chaque donnée acquise étant de préférence une image, et le capteur étant alors un capteur d'image(s).

L'invention concerne également un programme d'ordinateur comportant des instructions logicielles qui, lorsqu'elles sont exécutées par un ordinateur, mettent en oeuvre un procédé de traitement tel que défini ci-dessus.

L'invention a également pour objet un dispositif électronique de traitement de donnée(s), comprenant :

- un module d'acquisition configuré pour acquérir une donnée ;
- un module de traitement configuré pour traiter la donnée via l'inférence d'un algorithme d'intelligence artificielle, préalablement entraîné lors d'un entrainement préalable,

l'algorithme d'intelligence artificielle comportant une pluralité de blocs distincts d'intelligence artificielle, chacun ayant été préalablement entrainé lors de l'entrainement préalable, et le dispositif comprend en outre :

- un module de calcul configuré pour calculer un code à partir de la donnée acquise ;
- un module de sélection configuré pour sélectionner, en fonction du code calculé, un bloc parmi la pluralité de blocs d'intelligence artificielle,

le module de traitement étant alors configuré pour traiter la donnée via l'inférence, parmi la pluralité de blocs d'intelligence artificielle, du seul bloc d'intelligence artificielle sélectionné, la pluralité de blocs d'intelligence artificielle étant une pluralité de réseaux de neurones artificiels ou bien une pluralité de couches de traitement au sein d'un réseau de neurones artificiels.

L'invention concerne aussi un système électronique de traitement d'objet(s), le système comprenant un capteur, tel qu'un capteur d'image(s), un capteur sonore ou encore un capteur de détection d'objets, et un dispositif électronique de traitement de donnée(s) relié au capteur, le dispositif électronique de traitement étant tel que défini ci-dessus, et chaque donnée étant un signal issu du capteur.

Ces caractéristiques et avantages de l'invention apparaîtront plus clairement à la lecture de la description qui va suivre, donnée uniquement à titre d'exemple non limitatif, et faite en référence aux dessins annexés, sur lesquels :

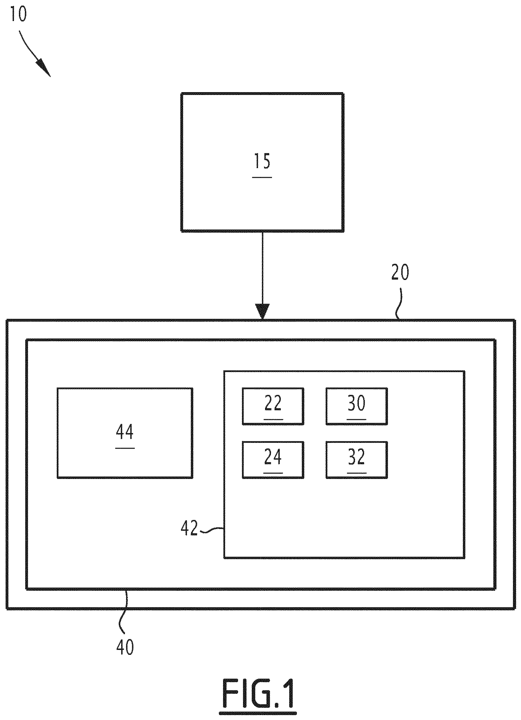

- la figure 1 est une représentation schématique d'un système électronique de traitement d'objets selon l'invention, comprenant un capteur et un dispositif électronique de traitement de données relié au capteur, le dispositif de traitement comportant un module d'acquisition d'au moins une donnée, un module de traitement de chaque donnée via l'inférence d'un algorithme d'intelligence artificielle avec une pluralité de blocs distincts d'intelligence artificielle, chacun ayant été préalablement entrainé, un module de calcul d'un code à partir de chaque donnée acquise respective, et un module de sélection, en fonction du code calculé, d'un bloc parmi la pluralité de blocs d'intelligence artificielle ;
- la figure 2 est une représentation schématique partielle du dispositif électronique de traitement de la figure 1, selon un premier mode de réalisation dans lequel la pluralité de blocs d'intelligence artificielle est une pluralité de réseaux de neurones artificiels ;
- la figure 3 est une vue analogue à celle de la figure 2, selon un deuxième mode de réalisation dans lequel la pluralité de blocs d'intelligence artificielle est une pluralité de couches de traitement au sein d'un réseau de neurones artificiels ;
- la figure 4 est un organigramme d'un procédé de traitement de données selon l'invention, le procédé étant mis en oeuvre par le dispositif électronique de traitement de la figure 1 ; et
- la figure 5 est une vue illustrant le comportement du dispositif électronique de traitement de la figure 2 lorsque deux images légèrement différentes lui sont successivement fournies pour être traitées.

Dans la présente description, sauf autre précision, les expressions « sensiblement », « environ », « approximativement » et « de l'ordre de » définissent une relation d'égalité à plus ou moins 10%, de préférence à plus ou moins 5%.

Dans la présente description, les termes « apprentissage » (de l'anglais *learning*) et « entraînement » (de l'anglais *training*) sont considérés comme équivalents, c'est-à-dire qu'ils ont la même signification, et sont alors employés de manière interchangeable.

Sur la figure 1, un système électronique 10 de traitement d'objet(s) est configuré pour traiter un ou plusieurs objets, non représentés.

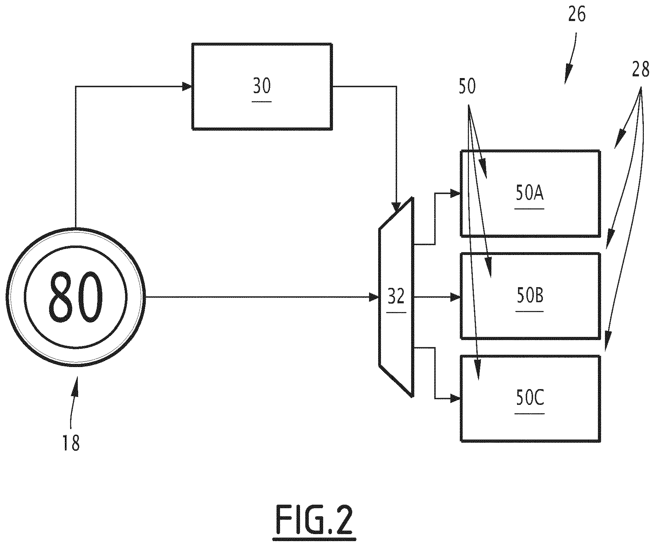

Le système électronique de traitement 10 comprend un capteur 15 apte à capter au moins un objet et un dispositif électronique de traitement 20 relié au capteur 15, le dispositif de traitement 20 étant configuré pour traiter au moins une donnée 18 issue du capteur 15, telle qu'une image, visible sur les figures 2, 3 et 5.

Le système électronique de traitement 10 est par exemple un système électronique de détection d'objet(s), le capteur 15 étant alors un détecteur d'objet(s) et le dispositif de traitement 20 étant configuré pour traiter au moins une donnée relative à l'objet détecté par le détecteur d'objet(s).

Le système électronique de traitement 10 forme par exemple un détecteur de visages apte à reconnaitre les visages de personnes préalablement identifiées et/ou à détecter des visages de personnes inconnues, c'est-à-dire des visages de personnes qui n'ont pas été préalablement identifiées. Le dispositif de traitement 20 permet alors d'apprendre les identités des personnes détectées, et aussi d'identifier des personnes inconnues.

Le système électronique de traitement 10 est également apte à reconnaître des objets dans l'environnement d'un véhicule automobile, lorsqu'il est embarqué à bord d'un tel véhicule, en particulier un véhicule autonome. Le dispositif de traitement 20 permet alors de traiter de tels objets, et en particulier de les classer par type, afin de faciliter le pilotage du véhicule autonome.

En variante, le système électronique de traitement 10 est un système électronique de segmentation d'image(s), le capteur 15 étant alors un capteur d'image(s) et le dispositif de traitement 20 étant configuré pour effectuer une segmentation de chaque image issue du capteur d'image(s).

Le capteur 15 est connu en soi. Le capteur 15 est par exemple un détecteur d'objet(s) configuré pour détecter un ou plusieurs objets, ou encore un capteur d'image(s) configuré pour prendre une ou plusieurs images d'une scène, et les transmettre au dispositif de traitement 20.

En variante, le capteur 15 est un capteur sonore, un capteur de détection d'objets, tel qu'un capteur lidar, un capteur radar, un capteur infrarouge, un capteur de proximité capacitif, un capteur de proximité inductif, un capteur de proximité à effet Hall ou encore un capteur de présence, configuré pour acquérir un signal caractéristique en fonction de la présence ou de l'absence d'objet(s), puis pour le transmettre au dispositif de traitement 20.

Le dispositif de traitement 20 comprend un module 22 d'acquisition d'au moins une donnée 18 et un module 24 de traitement de chaque donnée 18 via l'inférence d'un algorithme d'intelligence artificielle 26 comportant une pluralité de blocs 28 distincts d'intelligence artificielle, visibles sur les figures 2, 3 et 5, chacun ayant été préalablement entrainé et étant apte à mettre en oeuvre une même fonction de traitement pour ledit traitement de la donnée 18.

Ladite fonction de traitement mise en oeuvre par chacun des blocs d'intelligence artificielle 28 est typiquement choisie parmi le groupe consistant en : une fonction de classification et une fonction de segmentation.

L'homme du métier comprendra alors que lorsque le système électronique de traitement 10 est un système électronique de détection d'objet(s), la fonction de traitement mise en oeuvre par chacun des blocs d'intelligence artificielle 28 est une fonction de classification, apte à classer la donnée 18 parmi une pluralité de classes, c'est-à-dire à attribuer à la donnée 18 une classe parmi ladite pluralité de classes. Cette attribution de classe est typiquement effectuée en associant à la donnée 18 une étiquette (de l'anglais *label*) identifiant ladite classe.

L'homme du métier comprendra également que lorsqu'on variante le système électronique de traitement 10 est un système électronique de segmentation d'image(s), la fonction de traitement mise en oeuvre par chacun des blocs d'intelligence artificielle 28 est une fonction de segmentation.

Le dispositif de traitement 20 comprend en outre un module 30 de calcul d'un code à partir de chaque donnée acquise 18 respective, et un module 32 de sélection, en fonction du code calculé, d'un bloc 28 parmi la pluralité de blocs d'intelligence artificielle 28, le module de traitement 24 traitant alors la donnée 18 via l'inférence, parmi la pluralité de blocs d'intelligence artificielle 28, du seul bloc d'intelligence artificielle 28 sélectionné.

Le dispositif électronique de traitement 20 est par exemple en forme d'un calculateur.

Le dispositif de traitement 20 est alors typiquement configuré pour interpréter une scène captée par le capteur 15, c'est-à-dire pour identifier et/ou pour reconnaître un type d'un ou plusieurs éléments - tels que personnes ou objets physiques - présents dans la scène captée et correspondants au signal ou aux signaux captés par le capteur 15.

Dans l'exemple de la figure 1, le dispositif électronique de traitement 20 comprend une unité de traitement d'informations 40 formée par exemple d'une mémoire 42 et d'un processeur 44 associé à la mémoire 42.

Dans l'exemple de la figure 1, le module d'acquisition 22, le module de traitement 24, le module de calcul 30 et le module de sélection 32 sont réalisés chacun sous forme d'un logiciel, ou d'une brique logicielle, exécutable par le processeur 44. La mémoire 42 du dispositif électronique de traitement 20 est alors apte à stocker un logiciel d'acquisition de la donnée 18 à traiter, un logiciel de traitement de la donnée 18 via l'inférence de l'algorithme d'intelligence artificielle 26, un logiciel de calcul du code à partir de la donnée acquise 18 et un logiciel de sélection, en fonction du code calculé, d'un bloc 28 parmi la pluralité de blocs d'intelligence artificielle 28, le logiciel de traitement traitant alors la donnée 18 via l'inférence, parmi la pluralité de blocs d'intelligence artificielle 28, du seul bloc d'intelligence artificielle 28 sélectionné. Le processeur 44 est alors apte à exécuter chacun des logiciels parmi le logiciel d'acquisition, le logiciel de triatement, le logiciel de calcul et le logiciel de sélection.

En variante, non représentée, le module d'acquisition 22, le module de traitement 24, le module de calcul 30 et le module de sélection 32 sont réalisés chacun sous forme d'un composant logique programmable, tel qu'un FPGA (de l'anglais *Field Programmable Gate Array*), ou encore sous forme d'un circuit intégré dédié, tel qu'un ASIC (de l'anglais *Application Spécifie Integrated Circuit).*

Lorsque le dispositif électronique de traitement 20 est réalisé sous forme d'un ou plusieurs logiciels, c'est-à-dire sous forme d'un programme d'ordinateur, il est en outre apte à être enregistré sur un support, non représenté, lisible par ordinateur. Le support lisible par ordinateur est par exemple un médium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non volatile (par exemple EPROM, EEPROM, FLASH, NVRAM), une carte magnétique ou une carte optique. Sur le support lisible est alors mémorisé un programme d'ordinateur comprenant des instructions logicielles.

Le module d'acquisition 22 est configuré pour acquérir la ou chaque donnée 18.

Le module d'acquisition 22 est notamment configuré pour acquérir la ou chaque donnée 18 issue du capteur 15, correspondant à un objet préalablement capté par ledit capteur 15. Autrement dit, chaque donnée acquise 18 correspond alors à un signal capté par le capteur 15. Chaque donnée acquise 18 est de préférence une image, le capteur 15 étant alors un capteur d'image(s).

Le dispositif électronique de traitement 20, et en particulier le module d'acquisition 22, est par exemple relié de manière directe au capteur 15 ; ou en variante de manière indirecte audit capteur 15 via un ensemble de moyens de transmission. Selon cette variante, le dispositif électronique de traitement 20, et en particulier le module d'acquisition 22, n'est pas connecté directement en sortie du capteur 15, le dispositif électronique de traitement 20 étant connecté à l'ensemble de moyens de transmission, lui-même connecté en sortie du capteur 15. Cet ensemble de moyens de transmission comporte typiquement différents moyens de transmission et/ou différents protocoles de transmission, tels que les protocoles 3G, 4G, 5G, Wi-Fi, Bluetooth, connus en soi ; ainsi qu'un éventuel passage par le nuage (de l'anglais *cloud).*

Pour la transmission du signal issu du capteur 15, cet ensemble de moyens de transmission est susceptible d'appliquer une ou plusieurs transformations au signal brut issu du capteur 15, tel qu'une image ; la transformation étant par exemple une compression du signal.

L'homme du métier observera en outre que les attaques adverses que permet de parer le dispositif électronique de traitement 20 selon l'invention sont notamment des attaques qui s'attaqueraient justement aux signaux transitant sur cet ensemble de moyens de transmission. Le dispositif électronique de traitement 20 selon l'invention permet également de parer une attaque directe sur le capteur 15 qui perturberait un circuit de mesure dudit capteur, par exemple en jouant sur sa tension d'alimentation.

Le module de traitement 24 est configuré pour traiter la ou chaque donnée 18 via l'inférence de l'algorithme d'intelligence artificielle 26, préalablement entraîné.

Le module de traitement 24 est en particulier configuré pour traiter la donnée 18 via l'inférence, parmi la pluralité de blocs d'intelligence artificielle 28, du seul bloc d'intelligence artificielle 28 sélectionné, suite au calcul du code respectif par le module de calcul 30, et à la sélection subséquente, par le module de sélection 32 et en fonction du code calculé, d'un tel seul bloc 28 parmi la pluralité de blocs d'intelligence artificielle 28 au sein de l'algorithme d'intelligence artificielle 26.

L'algorithme d'intelligence artificielle 26 est préalablement entraîné à partir de données d'entraînement, lors d'un entraînement, également appelé apprentissage, préalable à l'inférence. Un tel entraînement est connu en soi.

L'algorithme d'intelligence artificielle 26 comporte la pluralité de blocs d'intelligence artificielle 28, chaque bloc d'intelligence artificielle 28 étant distinct, ou encore disjoint, des autres blocs d'intelligence artificielle 28 contenus dans l'algorithme d'intelligence artificielle 26.

Lors de l'apprentissage préalable de l'algorithme d'intelligence artificielle 26, chaque bloc d'intelligence artificielle 28 a été préalablement entraîné à partir de données d'entrainement associées à un même résultat attendu (de l'anglais *ground truth),* pour permettre la mise en oeuvre de la même fonction de traitement par chacun des blocs d'intelligence artificielle 28. Autrement dit, les données d'apprentissage comprennent des données d'entrée qui ont été labellisées avec un résultat attendu identique, et chaque bloc d'intelligence artificielle 28 a cherché à apprendre le même résultat attendu lors de cet apprentissage préalable.

L'homme du métier observera que bien que tous les blocs d'intelligence artificielle 28 de l'algorithme intelligence artificiel 26 soient adaptés pour mettre en oeuvre la même fonction de traitement, ils sont néanmoins distincts les uns des autres, cette distinction entre les blocs d'intelligence artificielle 28 résultant d'une topologie distincte d'un bloc 28 à l'autre, et/ou d'une méthode d'apprentissage distincte d'un bloc 28 à l'autre, et/ou d'une méthode d'initialisation distincte d'un bloc 28 à l'autre, et/ou d'une fonction de coût distincte d'un bloc 28 à l'autre, ainsi que cela est décrit plus en détail ci-après.

Lors de l'apprentissage préalable de l'algorithme d'intelligence artificielle 26, chaque bloc d'intelligence artificielle 28 a, par exemple, été entraîné indépendamment dudit ou desdits autres blocs d'intelligence artificielle 28. Autrement dit, l'apprentissage de chaque bloc d'intelligence artificielle 28 respectif est effectué de manière indépendante, c'est-à-dire de manière séparée, de l'apprentissage de chacun dudit ou desdits autres blocs d'intelligence artificielle 28.

En variante, lors de l'apprentissage préalable de l'algorithme d'intelligence artificielle 26, la pluralité de blocs d'intelligence artificielle 28 a été entraînée via une méthode d'apprentissage d'ensemble avec un objectif commun à la pluralité de blocs d'intelligence artificielle 28.

Selon cette variante, la méthode d'apprentissage d'ensemble est par exemple choisie parmi le groupe consistant en : une méthode d'apprentissage d'ensemble adverse, une méthode d'apprentissage d'ensemble avec promotion d'une diversité des prédictions des réseaux, une méthode d'apprentissage d'ensemble avec promotion d'une diversité des réseaux via une régularisation sur les gradients de la donnée d'entrée. La méthode d'apprentissage d'ensemble adverse est décrite dans l'article « Ensemble adversarial training: Attacks and defenses » de Tramer et al, publié en 2018. La méthode d'apprentissage d'ensemble avec promotion d'une diversité des prédictions des réseaux est décrite dans l'article « Improving adversarial robustness via promoting ensemble diversity» de Pang et al, publié en 2019. La méthode d'apprentissage d'ensemble avec promotion d'une diversité des réseaux via une régularisation sur les gradients de la donnée d'entrée est décrite dans l'article « Adversarial Defence by Diversified Simultaneous Training of Deep Ensembles » de Huang et al, publié en 2021.

L'algorithme d'intelligence artificielle 26 est typiquement un algorithme à base de réseau(x) de neurones artificiels 50.

Le nombre de blocs 28 au sein de la pluralité de blocs d'intelligence artificielle 28 est noté K, et l'algorithme d'intelligence artificielle 26 comporte alors K blocs d'intelligence artificielle 28. Le nombre K de blocs d'intelligence artificielle est par exemple supérieur ou égal à 3, et de préférence compris entre 3 et 5.

Selon un premier mode de réalisation, représenté à la figure 2, la pluralité de blocs d'intelligence artificielle 28 est une pluralité de réseaux de neurones artificiels 50, distincts les uns des autres. Autrement dit, selon ce premier mode de réalisation, chaque bloc d'intelligence artificielle 28 est un réseau respectif 50 de neurones artificiels.

Selon ce premier mode de réalisation, l'algorithme d'intelligence artificielle 26 est de préférence constitué de ladite pluralité de réseaux de neurones artificiels 50, et chaque réseau de neurones artificiels 50 est disjoint du ou des autres réseaux de neurones artificiels 50 au sein de l'algorithme d'intelligence artificielle 26.

Dans l'exemple de la figure 2, l'algorithme d'intelligence artificielle 26 comporte trois réseaux distincts 50 de neurones artificiels, à savoir un premier réseau de neurones 50A, un deuxième réseau de neurones 50B et un troisième réseau de neurones 50C.

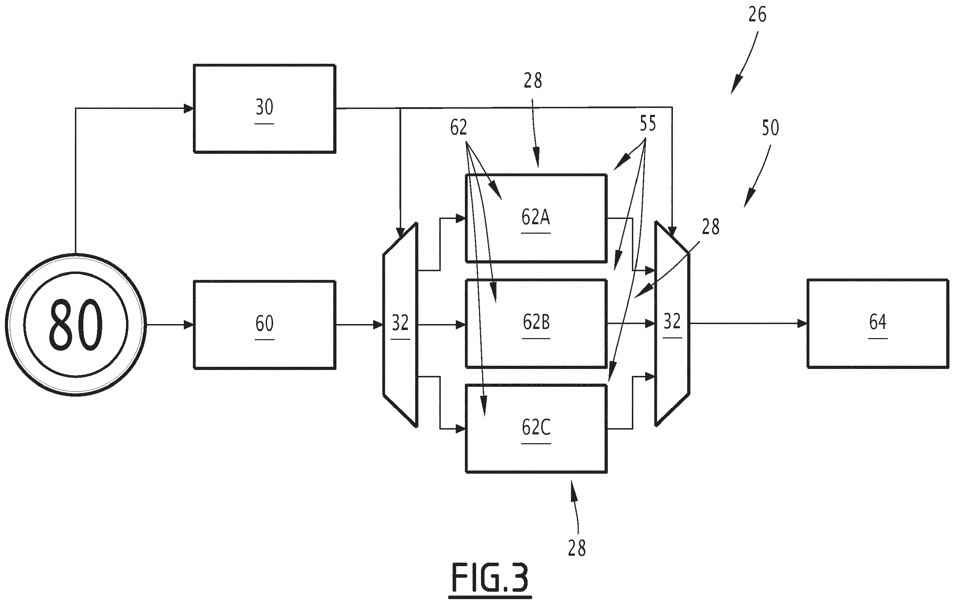

Selon un deuxième mode de réalisation, représenté à la figure 3, la pluralité de blocs d'intelligence artificielle est une pluralité de couches de traitement 55 au sein d'un même réseau 50 de neurones artificiels, c'est-à-dire au sein d'un seul réseau de neurones 50, les couches de traitement 55 étant distinctes les unes des autres au sein dudit réseau de neurones 50. Autrement dit, selon ce deuxième mode de réalisation, chaque bloc d'intelligence artificielle 28 est une couche de traitement 55 respective au sein de ce réseau de neurones 50.

Selon ce deuxième mode de réalisation, l'algorithme d'intelligence artificielle 26 inclut ce réseau de neurones 50 comportant lui-même ladite pluralité de couches de traitement 55 distinctes. Selon ce deuxième mode de réalisation, l'algorithme d'intelligence artificielle 26 est de préférence constitué dudit réseau de neurones 50 comportant la pluralité de couches de traitement 55, le réseau de neurones 50 étant alors unique.

Dans l'exemple de la figure 3, le réseau de neurones 50 comporte une couche d'entrée 60, connectée en entrée de plusieurs couches intermédiaires 62 agencées en parallèle les unes des autres, ces couches intermédiaires 62 étant elles-mêmes connectées chacune en entrée d'une couche de sortie 64. Autrement dit, dans cet exemple de la figure 3, le réseau de neurones 50 comporte la couche d'entrée 60, suivie des couches intermédiaires 62 en parallèle les unes des autres, elles-mêmes suivies de la couche de sortie 64.

Dans cet exemple, la pluralité de couches de traitement 55 correspond alors à la pluralité de couches intermédiaires 62. Dans l'exemple de la figure 3, l'algorithme d'intelligence artificielle 26 comporte alors trois couches de traitement 55 distinctes, à savoir une première couche intermédiaire 62A, une deuxième couche intermédiaire 62B et une troisième couche intermédiaire 62C.

Chaque bloc d'intelligence artificielle 28 est par exemple distinct du ou des autres blocs de la pluralité de blocs d'intelligence artificielle 28 de par l'utilisation d'une méthode d'initialisation distincte d'un bloc à l'autre, lors de l'entrainement préalable.

Chaque méthode d'initialisation est par exemple choisie parmi le groupe consistant en : une méthode d'initialisation Xavier uniforme, et une méthode d'initialisation Kaiming uniforme. Chaque méthode d'initialisation est aussi susceptible de générer des distributions avec de légères variations qui forment alors des initialisations différentes pour chacun des blocs d'intelligence artificielle 28. Chaque méthode d'initialisation est une méthode d'initialisation des poids synaptiques de l'algorithme d'intelligence artificielle 26, et en particulier de chaque bloc d'intelligence artificielle 28. Les méthodes d'initialisation Xavier uniforme et Kaiming uniforme sont connues en soi, et chacune de ces méthodes d'initialisation suit une distribution uniforme, comme leur nom l'indique.

En variante ou en complément, chaque bloc d'intelligence artificielle 28 est distinct du ou des autres blocs 28 de la pluralité de blocs d'intelligence artificielle de par l'utilisation d'une fonction de coût distincte lors de l'entrainement préalable.

Chaque fonction respective de coût est par exemple choisie parmi le groupe consistant en : une fonction de coût d'entropie croisée ; une fonction de coût du mélange gaussien ; et une fonction de coût Mahalanobolis maximal.

La fonction de coût d'entropie croisée vérifie par exemple l'équation suivante :

[1]

$$CEL(z,y) = -log \frac{exp(z_y)}{\sum_{c=1}^{C} exp(z_c)}$$

avec

[2]

$$z = bloc(x)$$

où CEL représente la fonction de coût d'entropie croisée ;
z représente un vecteur de sortie, en sortie du bloc d'intelligence artificielle 28 respectif lors de l'inférence dudit bloc 28 avec une entrée x ;
y représente une classe associée à l'entrée x ; et
c représente un indice de classe variant entre 1 et C, où C est le nombre de classes.

La fonction de coût du mélange gaussien vérifie par exemple l'équation suivante :

[3]

$$GML(z,y) = -log \frac{|\Lambda_y|^{-0.5} exp(-d_y)}{\sum_{c=1}^{C} |\Lambda_c|^{-0.5} exp(-d_c)} + \lambda \left(d_y + \frac{1}{2} log|\Lambda_y|\right)$$

$$avec\ d_c = \frac{1}{2}(z - \mu_c)^T |\Lambda_y|^{-1}(z + \mu_c)$$

où GML représente la fonction de coût du mélange gaussien ;
z représente un vecteur de sortie, en sortie du bloc d'intelligence artificielle 28 respectif lors de l'inférence dudit bloc avec une entrée x, selon l'équation (2) précédente ;
y représente une classe associée à l'entrée x ;
c représente un indice de classe variant entre 1 et C, où C est le nombre de classes ;
$\mu_c$ représente un centre de la gaussienne associée à la classe d'indice c ; et
$\Lambda_c$ représente une variance de la gaussienne associée à la classe d'indice c.

La fonction de coût Mahalanobolis maximal vérifie par exemple l'équation suivante :

[4]

$$MMC(z,y) = \frac{1}{2}\|z - \mu_y\|_2^2$$

où MMC représente la fonction de coût Mahalanobolis maximal ;
z représente un vecteur de sortie, en sortie du bloc d'intelligence artificielle 28 respectif lors de l'inférence dudit bloc avec une entrée x, selon l'équation (2) précédente ;

y représente une classe associée à l'entrée x ; et

$\mu_y$ représente un centre de la gaussienne associée à la classe y.

En variante ou en complément, chaque bloc d'intelligence artificielle 28 est distinct du ou des autres blocs 28 de la pluralité de blocs d'intelligence artificielle de par l'utilisation d'une méthode d'entrainement distincte lors de l'entrainement préalable.

Chaque méthode respective d'entrainement est par exemple choisie parmi le groupe consistant en : une méthode d'apprentissage adverse ; une méthode basée sur des défenses certifiées ; et une méthode basée sur une approche de régularisation.

La méthode d'apprentissage adverse, la méthode basée sur des défenses certifiées, et la méthode basée sur une approche de régularisation sont chacune connues en soi, et sont par exemple décrites respectivement dans les parties 2.3.1, 2.3.2 et 2.3.3 de l'article précité « Opportunities and Challenges in Deep Learning Adversarial Robustness: A Survey » de Silva et al, publié en 2020.

En variante ou en complément, chaque bloc d'intelligence artificielle 28 a une topologie basée sur un mécanisme d'apprentissage avec rétropropagation du gradient, distincte de la topologie respective du ou des autres blocs 28 de la pluralité de blocs d'intelligence artificielle.

Chaque topologie est par exemple choisie parmi le groupe consistant en : une topologie basée sur un mécanisme de convolution, une topologie basée sur un mécanisme d'attention, une topologie basée sur un mécanisme de récurrence.

La topologie basée sur un mécanisme de convolution est par exemple une topologie Resnet, une topologie MobileNet, ou encore une topologie EfficientNet.

La topologie basée sur un mécanisme d'attention est par exemple une topologie Transformer ou une topologie Linear Transformer.

La topologie basée sur un mécanisme de récurrence est par exemple une topologie LSTM (de l'anglais *Long Short Term Memory*), une topologie GRU (de l'anglais *Gated Récurrent Unit*), ou encore une topologie FastGRNN (de l'anglais *Fast, Accurate, Stable and Tiny Gated Récurrent Neural Network*).

Le module de calcul 30 est configuré pour calculer le code respectif à partir d'au moins une partie de la donnée acquise 18, le code calculé étant alors associé à ladite donnée 18. Le module de calcul 30 est par exemple configuré pour calculer le code respectif à partir de l'intégralité de la donnée acquise 18. En variante, le module de calcul 30 est configuré pour calculer le code respectif à partir d'une partie seulement de la donnée acquise 18, i.e. d'une portion seulement de la donnée 18, c'est-à-dire en ne prenant pas en compte l'intégralité de la donnée acquise 18.

Le module de calcul 30 est typiquement configuré pour calculer le code respectif par application d'une fonction déterministe à l'au moins une partie de la donnée acquise 18. Par fonction déterministe, on entend une fonction qui pour un même argument, c'est-à-dire une même entrée, renvoie toujours un même résultat, c'est-à-dire une même sortie. L'homme du métier comprendra notamment que la fonction déterministe est donc une fonction non-aléatoire.

Le mode de calcul 30 est par exemple configuré pour calculer ledit code par application d'une fonction de hachage à la donnée acquise 18, le code calculé étant alors un haché. La fonction de hachage forme alors ladite fonction déterministe.

L'homme du métier observera que le code calculé n'est pas pour autant nécessairement unique.

La fonction de hachage est de préférence une fonction de hachage cryptographique. Une fonction de hachage cryptographique est connue en soi, et est une fonction de hachage qui, à une donnée de taille arbitraire, associe une image de taille fixe. Une propriété importante d'une telle fonction de hachage est qu'elle est difficile, voire impossible, à inverser. En particulier, si l'image d'une donnée par la fonction de hachage cryptographique couplée à une clef privée se calcule facilement, le calcul inverse d'une donnée d'entrée ayant pour image une certaine valeur se révèle difficile, voire impossible. Une autre propriété importante est qu'à une donnée sera toujours associée la même image par la fonction de hachage. L'homme du métier comprendra que cette propriété vise à empêcher un attaquant de contrecarrer l'innovation en ciblant un des blocs neuronaux.

La fonction de hachage cryptographique est par exemple choisie parmi le groupe consistant en : une fonction SHA (de l'anglais *Secure Hash Algorithm*), telle que la fonction SHA-256 ou la fonction SHA-512 ; et la fonction MD5 (de l'anglais *Message Digest 5*).

Le module de sélection 32 est configuré pour sélectionner, en fonction du code calculé par le module de calcul 30, un bloc 28 respectif parmi la pluralité de blocs d'intelligence artificielle 28 inclus dans l'algorithme d'intelligence artificielle 26. Le module de traitement 24 est alors configuré pour traiter la donnée 18 via l'inférence, parmi la pluralité desdits blocs d'intelligence artificielle 28, du seul bloc 28 sélectionné.

Le module de sélection 32 est par exemple configuré pour sélectionner ce bloc 28 par application au code calculé d'une opération de troncation vers une distribution de K éléments, lorsque ledit code est un nombre, et où K représente le nombre de blocs distincts d'intelligence artificielle 28 inclus dans l'algorithme d'intelligence artificielle 26, K étant alors un entier supérieur ou égal à 2.

Selon cet exemple, à chacun des blocs d'intelligence artificielle 28 est associé un unique identifiant, et le module de sélection 32 est configuré pour sélectionner le bloc d'intelligence artificielle 28 dont l'identifiant correspond, voire est égal, au résultat de l'application de l'opération de troncation K.

En complément, le module de sélection 32 est configuré pour sélectionner ledit bloc 28 par application de l'opération de troncation à la partie entière du code calculé, si le code calculé n'est pas un nombre entier.

L'opération de troncation vers une distribution de K éléments est typiquement une opération tronquant toute distribution uniforme vers une distribution uniforme de K éléments ;

L'opération de troncation est par exemple une opération modulo K, telle qu'une opération modulo K appliquée au code converti en entier, tel qu'au code interprété en uint8, c'est-à-dire interprété en entier non-signé sur 8 bits ; ou encore telle qu'une opération modulo K appliquée sur la somme des bits du code, représenté sous forme binaire.

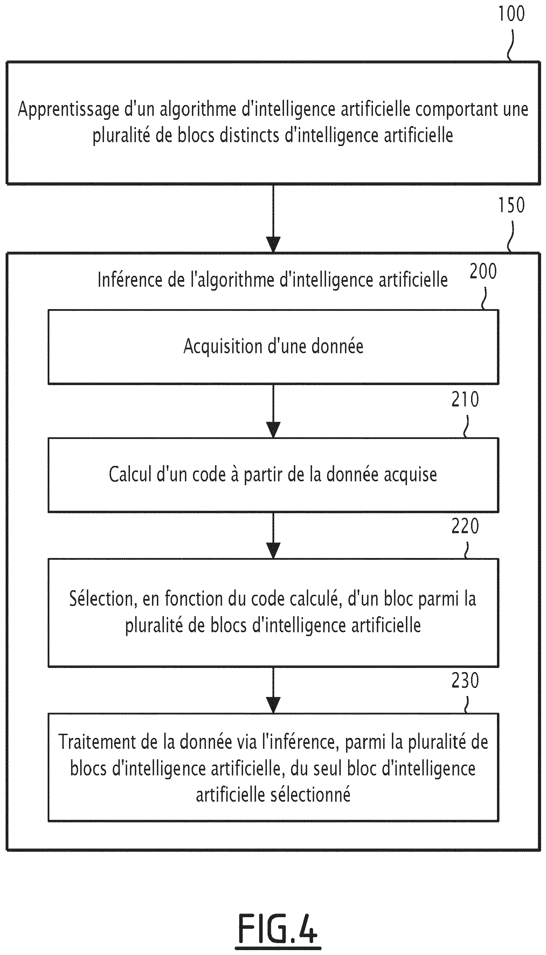

Le fonctionnement du dispositif électronique de traitement 20 selon l'invention va être à présent décrit en regard de la figure 4 représentant un organigramme du procédé de traitement selon l'invention, celui-ci étant mis en oeuvre par le dispositif de traitement 20.

Dans l'exemple de la figure 4, une phase initiale 100 d'apprentissage de l'algorithme d'intelligence artificielle 26, et en particulier de chacun de la pluralité de blocs distincts d'intelligence artificielle 28, précède une phase d'inférence 150 dans laquelle l'algorithme d'intelligence artificielle 26, préalablement entraîné, est utilisé pour calculer des valeurs de sortie, afin de traiter, notamment de classifier, i.e. classer, la ou les données 18.

Comme décrit précédemment, lors de cette phase d'apprentissage 100, chacun des blocs d'intelligence artificielle 28 est, par exemple, entraîné indépendamment du ou des autres blocs d'intelligence artificielle 28, ou en variante la pluralité de blocs d'intelligence artificielle 28 est entraînée via la méthode d'apprentissage d'ensemble avec objectif commun à la pluralité de blocs d'intelligence artificielle 28.

La phase d'apprentissage 100 est connue en soi, et est de préférence mise en oeuvre par un ordinateur, cette phase d'apprentissage 100 étant effectuée typiquement par un module logiciel, non représenté.

La phase d'inférence 150 subséquente est, quant à elle, mise en oeuvre par le dispositif de traitement 20, par exemple en forme d'un calculateur, et plus précisément par le module d'acquisition 22, puis le module de calcul 30, suivi du module de sélection 32 et enfin du module de traitement 24.

Le procédé de traitement correspond plus particulièrement à la phase référence 150, et comprend une étape initiale 200 lors de laquelle chaque donnée 18 à traiter est acquise par le dispositif de traitement 20, et en particulier par son module d'acquisition 22. En cas de pluralité de données 18 à traiter, celles-ci sont de préférence acquises successivement, les unes à la suite des autres.

À l'issue de l'étape d'acquisition 200, le procédé passe à une étape 210 lors de laquelle le dispositif de traitement 20 calcule, via son module de calcul 30, un code respectif pour chaque donnée 18 acquise.

Chaque code est par exemple calculé par application de la fonction de hachage cryptographique à la donnée acquise 18.

Suite à l'étape de calcul 210, le procédé de traitement passe à une étape 220 lors de laquelle le dispositif de traitement 20 sélectionne, via son module de sélection 32, un bloc 28 respectif parmi la pluralité de blocs d'intelligence artificielle 28 inclus dans l'algorithme d'intelligence artificielle 26, cette sélection étant effectuée en fonction du code calculé lors de l'étape de calcul 210 précédente. Cette sélection dépend alors du code calculé.

L'homme du métier comprendra alors que, lors de cette étape de sélection 220, le module de sélection 32 sélectionne un seul bloc 28 parmi la pluralité de blocs d'intelligence artificielle 28 que comporte l'algorithme d'intelligence artificielle 26.

Lorsque la pluralité de blocs d'intelligence artificielle 28 est la pluralité de réseaux de neurones artificiels 50 selon le premier mode de réalisation, le module de sélection 32 sélectionne alors un réseau de neurones 50 respectif parmi la pluralité de réseaux de neurones 50 inclus dans l'algorithme d'intelligence artificielle 26.

De manière analogue, lorsque la pluralité de blocs d'intelligence artificielle 28 est la pluralité de couches de traitement 55 au sein d'un même réseau 50 de neurones artificiels, selon le deuxième mode de réalisation, le module de sélection 32 sélectionne alors une couche de traitement 55 respective parmi la pluralité de couches de traitement 55 incluses dans l'algorithme d'intelligence artificielle 26, et en particulier dans ledit réseau 50 de neurones artificiels.

Cette sélection du bloc 28 est par exemple effectuée par application de l'opération de troncation vers la distribution de K éléments, telle que l'opération modulo K, ceci au code calculé ; voire à la partie entière du code calculé, si le code calculé n'est pas un nombre entier. Le bloc 28 sélectionné, i.e. le réseau sélectionné 50 selon le premier mode de réalisation ou bien la couche de traitement sélectionnée 55 selon le deuxième mode de réalisation, est alors celui dont l'identifiant correspond au résultat de l'application de l'opération de troncation, telle que l'opération modulo K.

À l'issue de l'étape de sélection 220, le procédé de traitement passe enfin à une étape 230 lors de laquelle le dispositif de traitement 20 traite la donnée 18, via son module de traitement 24 et l'inférence de l'algorithme d'intelligence artificielle 26, préalablement entraîné lors de la phase initiale d'apprentissage 100.

Lors de l'étape de traitement 230, selon l'invention, le module de traitement 24 traite la donnée 18 en effectuant alors l'inférence, parmi la pluralité de blocs d'intelligence artificielle 28, du seul bloc d'intelligence artificielle 28 sélectionné lors de l'étape de sélection 220 précédente.

Selon le premier mode de réalisation, le traitement de la donnée 18 est alors effectué via l'inférence du seul réseau de neurones 50 sélectionné, le ou les autres réseaux de neurones 50 de l'algorithme d'intelligence artificielle 26, qui n'ont pas été sélectionnés lors de ladite étape de sélection 220, n'étant alors pas mis en oeuvre lors de l'étape de traitement 230.

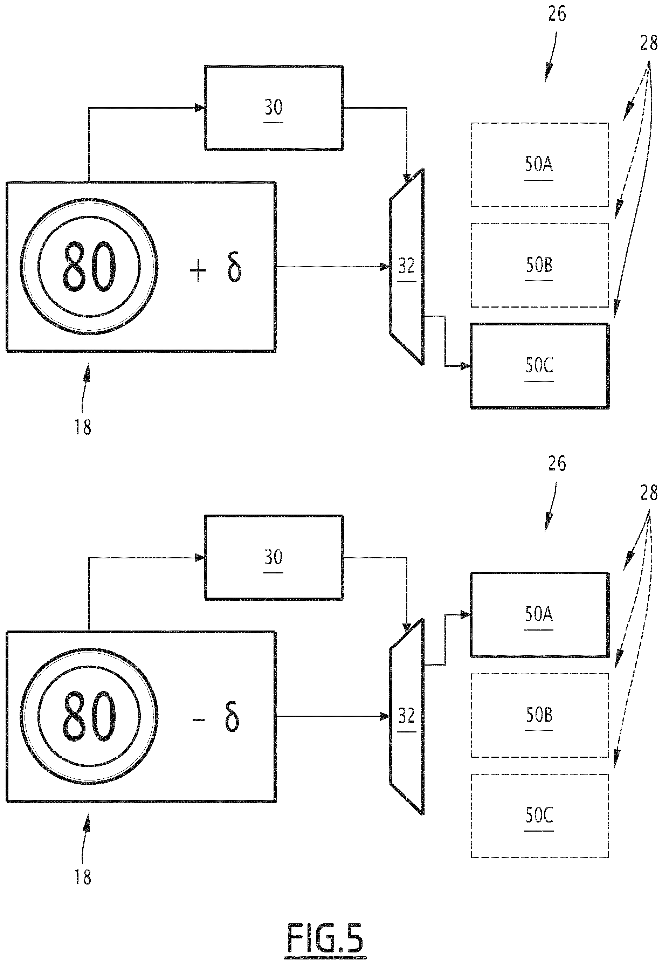

Dans l'exemple de la figure 5, pour une première donnée 18, correspondant à un panneau de signalisation, tel qu'un panneau de limitation à 80 km/h, auquel est ajoutée une perturbation $\delta$, le réseau de neurones 50 sélectionné lors de l'étape de sélection 220 est le troisième réseau de neurones 50C, et la première donnée 18 est alors traitée en inférant le troisième réseau de neurones 50C lors de l'étape de traitement 230 subséquente, comme représenté en partie supérieure de la figure 5.

Dans cet exemple de la figure 5, pour une deuxième donnée 18, correspondant au panneau de signalisation, tel qu'un panneau de limitation à 80 km/h, auquel est soustraite la perturbation $\delta$, le réseau de neurones 50 sélectionné lors de l'étape de sélection 220 est le premier réseau de neurones 50A, et la deuxième donnée 18 est alors traitée en inférant le premier réseau de neurones 50A lors de l'étape de traitement 230 subséquente, comme représenté en partie inférieure de la figure 5.

Selon le deuxième mode de réalisation, le traitement de la donnée 18 est alors effectué via l'inférence de la couche de traitement 55 sélectionnée, le ou les autres couches de traitement 55 qui n'ont pas été sélectionnées lors de ladite étape de sélection 220, n'étant alors pas mises en oeuvre lors de l'étape de traitement 230.

Selon ce deuxième mode de réalisation, l'homme du métier comprendra bien entendu que la sélection de ladite couche de traitement 55 lors de l'étape de sélection 220 n'empêche néanmoins pas la mise en oeuvre de couches de traitement du réseau de neurones 50, autres que celles de la pluralité de couches de traitement 55 considérée pour ladite sélection. Les couches du réseau de neurones 50, autres que celles de la pluralité de couches de traitement 55 considérée pour ladite sélection, sont d'ailleurs de préférence mises en oeuvre lors du traitement de la donnée 18 via l'inférence de l'algorithme d'intelligence artificielle 26.

À titre d'exemple, avec un exemple analogue à celui de la figure 5 et en considérant le réseau de neurones 50 de la figure 3, pour la première donnée 18, correspondant à un panneau de signalisation, tel qu'un panneau de limitation à 80 km/h, auquel est ajoutée une perturbation $\delta$, la couche de traitement 55 sélectionnée lors de l'étape de sélection 220 est la troisième couche intermédiaire 62C, et la première donnée 18 est alors traitée en inférant successivement la couche d'entrée 60, puis la couche de traitement 55 sélectionnée, à savoir la troisième couche intermédiaire 62C, et enfin la couche de sortie 64.

Selon cet exemple, pour la deuxième donnée 18, correspondant au panneau de signalisation, tel qu'un panneau de limitation à 80 km/h, auquel est soustraite la perturbation $\delta$, la couche de traitement 55 sélectionnée lors de l'étape de sélection 220 est la première couche intermédiaire 62A, et la deuxième donnée 18 est alors traitée en inférant successivement la couche d'entrée 60, puis la couche de traitement 55 sélectionnée, à savoir la première couche intermédiaire 62A, et enfin la couche de sortie 64.

À l'issue de l'étape de traitement 230, le procédé de traitement retourne à l'étape initiale d'acquisition 200 pour acquérir une nouvelle donnée 18 en vue de son traitement.

Cette sélection du bloc 28 utilisé pour l'inférence parmi la pluralité de blocs d'intelligence artificielle 28 inclus dans l'algorithme d'intelligence artificielle 26 est effectuée d'une manière secrète, c'est-à-dire inconnue d'une potentielle attaque adverse. En outre, le bloc 28 sélectionné pour l'inférence est susceptible de varier d'une donnée à l'autre.

Aussi, une attaque adverse cherchant à effectuer une approximation par essais successifs du gradient de l'algorithme d'intelligence artificielle 26 mettra en oeuvre, lors de ces essais successifs, différents blocs 28 d'intelligence artificielle parmi la pluralité de blocs d'intelligence artificielle, ce qui faussera l'approximation numérique du gradient de l'algorithme d'intelligence artificielle 26 que cherche à effectuer l'attaque adverse.

Cette utilisation de différents blocs d'intelligence artificielle 28 lors d'essais successifs avec des données 18 successives est illustrée à la figure 5, où pour la première donnée 18 correspondant à une image, telle que le panneau de signalisation, à laquelle est ajoutée la perturbation $\delta$, c'est par exemple le troisième bloc, tel que le troisième réseau de neurones 50C, qui est sélectionné, puis inféré pour traiter cette première donnée, alors que pour la deuxième donnée 18 correspondant à cette image à laquelle est soustraite la perturbation $\delta$, c'est par exemple le premier bloc, tel que le premier réseau de neurones 50A, qui est sélectionné, puis inféré pour traiter cette deuxième donnée 18.

Ainsi, le procédé de traitement selon l'invention offre une meilleure robustesse aux attaques adverses basées sur une approximation du gradient. Cette amélioration de la robustesse est en outre illustrée à l'aide de différents résultats obtenus, tels que présentés ci-après.

Le tableau 1 ci-après montre alors les résultats obtenus en termes de taux de précision de traitement, typiquement en termes de taux de précision de classification, avec un procédé de traitement de l'état de la technique pour lequel l'apprentissage de l'algorithme d'intelligence artificielle a été effectué en utilisant la fonction de coût d'entropie croisée, également notée CEL (de l'anglais *Cross Entropy Loss*), avec une indication de la précision initiale, ainsi que de la précision suite à une attaque d'approximation du gradient par perturbation simultanée, également notée SPSA (de l'anglais *Simultaneous Perturbation Gradient Approximation*), et selon le nombre d'images utilisées pour ladite attaque. Pour ce tableau 1, l'attaque SPSA a été faite avec 10 itérations et un paramètre epsilon égal à 8/255. De manière générale, les attaques SPSA présentées par la suite ont été conduites de manière « non ciblée », c'est-à-dire qu'elles ne cherchent qu'à tromper la prédiction du traitement de la donnée via l'inférence, sans pour autant chercher à tromper la véritable classe par une classe cible déterminé en entrée de l'attaque (ce qui serait alors qualifié d'attaque « ciblée »).

Ce tableau 1 montre alors que le taux de précision de traitement avec le procédé de l'état de la technique chute de manière importante suite à une telle attaque, y compris pour un nombre relativement faible d'images utilisées lors de l'attaque. Le taux de précision est presque divisé par trois pour un nombre d'images égal à 10 lors de l'attaque, ce taux de précision diminuant encore davantage lorsque le nombre d'images utilisées lors de l'attaque augmente.

[Table 1]

| Etat de la technique - CEL - Précision initiale = 72,7 % | |
|---|---|
| Nombre d'images pour attaque | Précision suite à attaque SPSA (10 itérations, epsilon = 8/255) |
| 10 | 26,4 % |
| 128 | 10,6 % |
| 1024 | 9,8 % |

Le tableau 2 ci-après montre les résultats obtenus dans des circonstances identiques à celles utilisées pour le tableau 1, avec cette fois-ci le procédé de traitement selon l'invention où l'algorithme d'intelligence artificielle 26 comporte trois réseaux de neurones 50 distincts, préalablement appris à partir d'une méthode d'initialisation différente pour chaque bloc d'intelligence artificielle 28 et avec la fonction de coût CEL.

Ce tableau 2 montre alors que le taux de précision de traitement avec le procédé selon l'invention chute bien moins rapidement suite à l'attaque SPSA ; et que le taux de précision obtenu avec le procédé selon l'invention est de manière générale sensiblement le double, voire davantage, de celui du procédé de l'état de la technique, suite à ladite attaque.

[Table 2]

| Invention (3 réseaux) - CEL - Précision initiale = 73,4 % | |
|---|---|
| Nombre d'approximations du gradient par itération de l'attaque | Précision suite à attaque SPSA (10 itérations, epsilon = 8/255) |
| 10 | 52,2 % |
| 128 | 32,8 % |
| 1024 | 17,8% |

Le tableau 3 ci-après concerne le procédé de traitement de l'état de la technique, et est analogue au tableau 1 présenté ci-dessus, et vise à montrer l'évolution du taux de précision lorsque le nombre d'itérations mises en oeuvre pour effectuer l'attaque SPSA augmente, le tableau 3 montrant alors les résultats obtenus pour 10 itérations comme dans le cas du tableau 1, puis pour 20, 50 et respectivement 100 itérations.

[Table 3]

| Etat de la technique - CEL - Précision initiale = 72,7 % | | | | |
|---|---|---|---|---|
| Nombre d'approximations du gradient par itération de l'attaque | Précision suite à attaque SPSA (epsilon = 8/255) | | | |
| | 10 itérations | 20 itérations | 50 itérations | 100 itérations |
| 10 | 26,4 % | 16,1 % | 10,5 % | 9,7 % |
| 128 | 10,6 % | 9,8 % | 9,7 % | 9,7 % |

(suite)

| Etat de la technique - CEL - Précision initiale = 72,7 % | | | | |
|---|---|---|---|---|
| Nombre d'approximations du gradient par itération de l'attaque | Précision suite à attaque SPSA (epsilon = 8/255) | | | |
| | 10 itérations | 20 itérations | 50 itérations | 100 itérations |
| 1024 | 9,8 % | 9,7 % | 9,7 % | 9,6 % |

Le tableau 4 ci-après montre les résultats obtenus dans des circonstances identiques à celles utilisées pour le tableau 3, en utilisant le procédé de traitement selon l'invention où l'algorithme d'intelligence artificielle 26 comporte trois réseaux de neurones 50 distincts, préalablement appris avec la fonction de coût CEL.

Ce tableau 4 montre à nouveau que le taux de précision de traitement avec le procédé selon l'invention chute bien moins rapidement suite à l'attaque.

En comparant les résultats obtenus dans les tableaux 3 et 4, l'homme du métier observera alors que les taux de précision obtenus avec le procédé selon l'invention sont systématiquement bien meilleurs que ceux obtenus avec le procédé de l'état de la technique, ceux-ci étant même parfois près de trois fois meilleurs.

[Table 4]

| Invention (3 réseaux) - CEL - Précision initiale = 73,4 % | | | | |
|---|---|---|---|---|
| Nombre d'approximations du gradient par itération de l'attaque | Précision suite à attaque SPSA (epsilon = 8/255) | | | |
| | 10 itérations | 20 itérations | 50 itérations | 100 itérations |
| 10 | 52,2 % | 45,8 % | 37,5 % | 33,7 % |
| 128 | 32,8 % | 23,4 % | 17 % | 15,8 % |
| 1024 | 17,8% | 13,9 % | 11,5 % | 10,8 % |

Le tableau 5 ci-après montre les résultats obtenus dans des circonstances analogues à celles utilisées pour le tableau 4, avec le procédé de traitement selon l'invention où l'algorithme d'intelligence artificielle 26 comporte trois réseaux de neurones 50 distincts, avec la différence que les trois réseaux de neurones 50 sont en outre appris avec des fonctions de coût distinctes d'un réseau de neurones 50 à l'autre, un réseau de neurones 50 ayant été appris avec la fonction de coût CEL, un autre réseau de neurones 50 ayant été appris avec la fonction de coût du mélange gaussien, également notée GML (de l'anglais *Gaussian Mixture Loss*), et le dernier réseau de neurones 50 ayant été appris avec la fonction de coût de Mahalanobolis maximale, également notée MMC (de l'anglais *Max Mahalanobolis Center*).

Ce tableau 5 montre que le taux de précision de traitement avec le procédé selon l'invention chute encore moins rapidement suite à l'attaque SPSA, les résultats obtenus selon ce tableau 5 avec l'utilisation de fonctions de coût distinctes d'un réseau de neurones 50 à l'autre lors de l'apprentissage étant en effet meilleurs que ceux obtenus selon le tableau 4 ci-dessus.

[Table 5]

| Invention (3 réseaux) - CEL / GML / MMC - Précision initiale = 73,2 % | | | | |
|---|---|---|---|---|
| Nombre d'approximations du gradient par itération de l'attaque | Précision suite à attaque SPSA (epsilon = 8/255) | | | |
| | 10 itérations | 20 itérations | 50 itérations | 100 itérations |
| 10 | 58,5 % | 55,8 % | 52,8 % | 50,5 % |
| 128 | 54,4 % | 49,9 % | 47 % | 45,3 % |
| 1024 | 48,5 % | 45 % | 41,9 % | 41 % |

Le tableau 6 ci-après montre les résultats obtenus avec le procédé de traitement selon l'invention dans le cas de l'attaque SPSA avec 10 itérations et un paramètre epsilon est égal à 8/255, selon le nombre d'images utilisées pour ladite attaque, et en faisant varier en outre, d'une colonne du tableau 6 à l'autre, le nombre de réseaux de neurones 50 distincts contenus dans l'algorithme d'intelligence artificielle 26.

Ce tableau 6 montre à nouveau que les résultats obtenus avec le procédé de traitement selon l'invention sont bien meilleurs que ceux obtenus avec le procédé de l'état de la technique. L'homme du métier observera en outre que l'augmentation du nombre de réseaux de neurones 50 inclus dans l'algorithme d'intelligence artificielle 26 n'améliore pas de manière significative les résultats obtenus lorsque le nombre de réseaux de neurones passe de trois, à quatre et enfin à cinq. Dans cet exemple, le nombre de réseaux de neurones 50 sera alors préférentiellement choisi égal à trois.

[Table 6]

| **Invention** | | | |
|---|---|---|---|
| Nombre d'approximations du gradient par itération de l'attaque | Précision suite à attaque SPSA (10 itérations, epsilon = 8/255) | | |
| | **3 réseaux** - CEL Initiale = 73,4 % | **4 réseaux** - CEL Initiale = 73,4 % | **5 réseaux** - CEL Initiale = 73,1 % |
| 10 | 52,2 % | 54,1 % | 55,6 % |
| 128 | 32,8 % | 37,3 % | 39 % |
| 1024 | 17,8 % | 20,7 % | 22,3 % |

Le tableau 7 ci-après montre les résultats obtenus dans des circonstances identiques à celles utilisées pour le tableau 4 ci-dessus, avec le procédé de traitement selon l'invention à la différence que l'algorithme d'intelligence artificielle 26 comporte ici quatre réseaux de neurones 50 distincts.

Ce tableau 7 confirme la faible influence sur les résultats obtenus lors d'une augmentation du nombre de réseaux de neurones 50 inclus dans l'algorithme d'intelligence artificielle 26.

[Table 7]

| **Invention (4 réseaux)** - CEL - Précision initiale = 73,4 % | | | | |
|---|---|---|---|---|
| Nombre d'approximations du gradient par itération de l'attaque | Précision suite à attaque SPSA (epsilon = 8/255) | | | |
| | 10 itérations | 20 itérations | 50 itérations | 100 itérations |
| 10 | 54,1 % | 49,4 % | 42 % | 38 % |
| 128 | 37,3 % | 28 % | 20 % | 17,8 % |
| 1024 | 20,7 % | 15,7 % | 12,7% | 11,6 % |

Le tableau 8 ci-après montre les résultats obtenus dans des circonstances identiques à celles utilisées pour les tableaux 4 et 7 ci-dessus, avec le procédé de traitement selon l'invention à la différence que l'algorithme d'intelligence artificielle 26 comporte ici cinq réseaux de neurones 50 distincts. Ce tableau 8 confirme à nouveau la faible influence de l'augmentation du nombre de réseaux de neurones 50.

[Table 8]

| **Invention (5 réseaux)** - CEL - Précision initiale = 73,1 % | | | | |
|---|---|---|---|---|
| Nombre d'approximations du gradient par itération de l'attaque | Précision suite à attaque SPSA (epsilon = 8/255) | | | |
| | 10 itérations | 20 itérations | 50 itérations | 100 itérations |
| 10 | 55,6 % | 51,3 % | 44,3 % | 41 % |
| 128 | 39 % | 30,5 % | 22,3 % | 19,1 % |
| 1024 | 22,3 % | 16,8 % | 12,8 % | 12 % |

On conçoit ainsi que le procédé de traitement selon l'invention, et le dispositif électronique de traitement 20 associé, permettent d'offrir une meilleure robustesse aux attaques adverses basées sur une estimation du gradient.

**Revendications**

1. Procédé de traitement de donnée(s) (18), mis en oeuvre par un dispositif électronique de traitement (20) et comprenant les étapes suivantes :

   - acquisition (200) d'une donnée (18), chaque donnée (18) acquise correspondant à un signal capté par un capteur (15) ;
   - traitement (230) de la donnée (18) via l'inférence d'un algorithme d'intelligence artificielle (26), préalablement entraîné lors d'un entrainement préalable (100),
   caractérisé ce que l'algorithme d'intelligence artificielle (26) comporte une pluralité de blocs distincts d'intelligence artificielle (28), chacun ayant été préalablement entraîné lors de l'entrainement préalable et étant apte à mettre en oeuvre une même fonction de traitement pour ledit traitement de la donnée (18), et
   en ce que le procédé comprend, en outre et préalablement à l'étape de traitement (230), les étapes suivantes :

      - calcul (210) d'un code à partir d'au moins une partie de la donnée (18) acquise ;
      - sélection (220), en fonction du code calculé, d'un bloc (28) parmi la pluralité de blocs d'intelligence artificielle (28),

   l'étape de traitement (230) étant alors effectuée via l'inférence, parmi la pluralité de blocs d'intelligence artificielle (28), du seul bloc d'intelligence artificielle (28) sélectionné,
   la pluralité de blocs d'intelligence artificielle (28) étant une pluralité de réseaux de neurones artificiels (50) ou bien une pluralité de couches de traitement (55) au sein d'un réseau de neurones artificiels (50).

2. Procédé selon la revendication 1, dans lequel, lors de l'étape de calcul (210), le code est un haché, calculé par application d'une fonction de hachage à l'au moins une partie de la donnée (18) acquise.

3. Procédé selon la revendication 2, dans lequel la fonction de hachage est une fonction de hachage cryptographique ; la fonction de hachage étant de préférence choisi parmi le groupe consistant en : une fonction SHA, telle que la fonction SHA-256 ou la fonction SHA-515 ; et la fonction MD5.

4. Procédé selon l'une quelconque des revendications précédentes, dans lequel le code calculé est un nombre ; et lors de l'étape de sélection (220), une opération de troncation vers une distribution de K éléments est appliquée au code calculé, et le bloc intelligence artificiel sélectionné (28) est celui dont l'identifiant est égal au résultat de l'application de l'opération de troncation ; K représentant le nombre de blocs distincts d'intelligence artificielle (28) et étant alors un entier supérieur ou égal à 2,

   l'opération de troncation étant en outre appliquée à la partie entière du code calculé, si le code calculé n'est pas un nombre entier ;
   l'opération de troncation étant de préférence une opération tronquant toute distribution uniforme vers une distribution uniforme de K éléments ;
   l'opération de troncation étant de préférence encore une opération modulo K.

5. Procédé selon l'une quelconque des revendications précédentes, dans lequel, lors de l'entrainement préalable (100), chaque bloc d'intelligence artificielle (28) a été préalablement entraîné indépendamment du ou des autres blocs d'intelligence artificielle (28).

6. Procédé selon l'une quelconque des revendications 1 à 4, dans lequel, lors de l'entrainement préalable (100), la pluralité de blocs d'intelligence artificielle (28) a été préalablement entraînée via une méthode d'apprentissage d'ensemble avec un objectif commun à la pluralité de blocs d'intelligence artificielle (28) ;
   la méthode d'apprentissage d'ensemble étant de préférence choisie parmi le groupe consistant en : une méthode d'apprentissage d'ensemble adverse, une méthode d'apprentissage d'ensemble avec promotion d'une diversité des prédictions des réseaux, une méthode d'apprentissage d'ensemble avec promotion d'une diversité des réseaux via une régularisation sur les gradients de la donnée d'entrée.

**7.** Procédé selon l'une quelconque des revendications précédentes, dans lequel chaque bloc d'intelligence artificielle (28) est distinct du ou des autres blocs de la pluralité de blocs d'intelligence artificielle (28) de par l'utilisation d'une méthode d'initialisation distincte d'un bloc à l'autre, lors de l'entrainement préalable (100) ;
chaque méthode d'initialisation étant de préférence choisie parmi le groupe consistant en : une méthode d'initialisation Xavier uniforme, et une méthode d'initialisation Kaiming uniforme.

**8.** Procédé selon l'une quelconque des revendications précédentes, dans lequel chaque bloc d'intelligence artificielle (28) est distinct du ou des autres blocs de la pluralité de blocs d'intelligence artificielle (28) de par l'utilisation d'une fonction de coût distincte lors de l'entrainement préalable (100) ;
chaque fonction respective de coût étant de préférence choisie parmi le groupe consistant en : une fonction de coût d'entropie croisée ; une fonction de coût du mélange gaussien ; et une fonction de coût de Mahalanobolis maximale.

**9.** Procédé selon l'une quelconque des revendications précédentes, dans lequel chaque bloc d'intelligence artificielle (28) est distinct du ou des autres blocs de la pluralité de blocs d'intelligence artificielle (28) de par l'utilisation d'une méthode d'entrainement distinct lors de l'entrainement préalable (100) ;
chaque méthode respective d'entrainement étant de préférence choisie parmi le groupe consistant en : une méthode d'apprentissage adverse ; une méthode basée sur des défenses certifiées ; et une méthode basée sur une approche de régularisation.

**10.** Procédé selon l'une quelconque des revendications précédentes, dans lequel chaque bloc d'intelligence artificielle (28) a une topologie basée sur un mécanisme d'apprentissage avec rétropropagation du gradient, distincte de la topologie respective du ou des autres blocs de la pluralité de blocs d'intelligence artificielle (28) ;
chaque topologie étant de préférence choisie parmi le groupe consistant en : une topologie basée sur un mécanisme de convolution, une topologie basée sur un mécanisme d'attention, une topologie basée sur un mécanisme de récurrence.

**11.** Procédé selon l'une quelconque des revendications précédentes, dans lequel le nombre K de blocs d'intelligence artificielle (28) est supérieur ou égal à 3 ;
le nombre K de blocs d'intelligence artificielle (28) étant de préférence compris entre 3 et 5.

**12.** Procédé selon l'une quelconque des revendications précédentes, dans lequel chaque bloc d'intelligence artificielle (28) a été préalablement entrainé lors de l'entrainement préalable à partir de données d'entrainement associées à un même résultat attendu, pour la mise en oeuvre de la même fonction de traitement par chacun des blocs d'intelligence artificielle (28) ;
ladite fonction de traitement mise en oeuvre par chacun des blocs d'intelligence artificielle (28) étant de préférence choisie parmi le groupe consistant en : une fonction de classification et une fonction de segmentation.

**13.** Programme d'ordinateur comportant des instructions logicielles qui, lorsqu'elles sont exécutées par un ordinateur, mettent en oeuvre un procédé selon l'une quelconque des revendications précédentes.

**14.** Dispositif électronique (20) de traitement de donnée(s) (18), comprenant :

- un module d'acquisition (22) configuré pour acquérir une donnée (18), chaque donnée (18) acquise correspondant à un signal capté par un capteur (15) ;
- un module de traitement (24) configuré pour traiter la donnée (18) via l'inférence d'un algorithme d'intelligence artificielle (26), préalablement entraîné lors d'un entrainement préalable,
caractérisé ce que l'algorithme d'intelligence artificielle (26) comporte une pluralité de blocs distincts d'intelligence artificielle (28), chacun ayant été préalablement entrainé lors de l'entrainement préalable et étant apte à mettre en oeuvre une même fonction de traitement pour ledit traitement de la donnée (18), et
en ce que le dispositif (20) comprend en outre :

- un module de calcul (30) configuré pour calculer un code à partir d'au moins une partie de la donnée (18) acquise ;
- un module de sélection (32) configuré pour sélectionner, en fonction du code calculé, un bloc parmi la pluralité de blocs d'intelligence artificielle (28),

le module de traitement (24) étant alors configuré pour traiter la donnée (18) via l'inférence, parmi la pluralité de blocs d'intelligence artificielle (28), du seul bloc d'intelligence artificielle (28) sélectionné,

la pluralité de blocs d'intelligence artificielle (28) étant une pluralité de réseaux de neurones artificiels (50) ou bien une pluralité de couches de traitement (55) au sein d'un réseau de neurones artificiels (50).

15. Système électronique (10) de traitement d'objet(s), le système (10) comprenant un capteur (15) et un dispositif électronique (20) de traitement de donnée(s) relié au capteur (15),
**caractérisé en ce que** le dispositif électronique de traitement (20) est selon la revendication précédente, et chaque donnée est un signal issu du capteur (15).

10

15

20

44

22  30

24  32

42

40

## FIG.1

FIG.2

FIG.3

100

Apprentissage d'un algorithme d'intelligence artificielle comportant une pluralité de blocs distincts d'intelligence artificielle

150

Inférence de l'algorithme d'intelligence artificielle

200

Acquisition d'une donnée

210

Calcul d'un code à partir de la donnée acquise

220

Sélection, en fonction du code calculé, d'un bloc parmi la pluralité de blocs d'intelligence artificielle

230

Traitement de la donnée via l'inférence, parmi la pluralité de blocs d'intelligence artificielle, du seul bloc d'intelligence artificielle sélectionné

## FIG.4

21

FIG.5

Europäisches
Patentamt

European
Patent Office

Office européen
des brevets

## RAPPORT DE RECHERCHE EUROPEENNE

Numéro de la demande

**EP 23 16 3938**

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | XIAO WANG ET AL: "Block Switching: A Stochastic Approach for Deep Learning Security", ARXIV.ORG, CORNELL UNIVERSITY LIBRARY, 201 OLIN LIBRARY CORNELL UNIVERSITY ITHACA, NY 14853, 19 février 2020 (2020-02-19), XP081603456, * page 1 – page 4 * ----- | 1-15 | INV. G06N3/04 G06N3/08 G06N20/20 G06V20/58 G06N3/0464 G06N3/094 G06N3/045 G06N3/084 |
| A | EP 3 751 476 A1 (BAIDU USA LLC [US]) 16 décembre 2020 (2020-12-16) * abrégé; figure 3 * * alinéa [0005] – alinéa [0007] * ----- | 1-15 | |
| A | US 2020/410090 A1 (BAKER JAMES K [US]) 31 décembre 2020 (2020-12-31) * abrégé; figures 1,2 * ----- | 1-15 | |

DOMAINES TECHNIQUES RECHERCHES (IPC)

G06N
G06K
G06V

Le présent rapport a été établi pour toutes les revendications

| Lieu de la recherche | Date d'achèvement de la recherche | Examinateur |
|---|---|---|
| La Haye | 11 août 2023 | De Meyer, Arnaud |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 23 16 3938

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

11-08-2023

| Document brevet cité au rapport de recherche | | Date de publication | Membre(s) de la famille de brevet(s) | | Date de publication |
|---|---|---|---|---|---|
| EP  3751476 | A1 | 16-12-2020 | CN | 112085152 A | 15-12-2020 |
| | | | EP | 3751476 A1 | 16-12-2020 |
| | | | JP | 7017600 B2 | 08-02-2022 |
| | | | JP | 2020201939 A | 17-12-2020 |
| | | | KR | 20200143241 A | 23-12-2020 |
| | | | US | 2020394466 A1 | 17-12-2020 |
| US 2020410090 | A1 | 31-12-2020 | US | 2020410090 A1 | 31-12-2020 |
| | | | WO | 2020028036 A1 | 06-02-2020 |

Pour tout renseignement concernant cette annexe : voir Journal Officiel de l'Office européen des brevets, No.12/82

EPO FORM P0460

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **SILVA et al.** *Opportunities and Challenges in Deep Learning Adversarial Robustness: A Survey,* 2020
- **TRAMER et al.** *Ensemble adversarial training: Attacks and defenses,* 2018
- **PANG et al.** *Improving adversarial robustness via promoting ensemble diversity,* 2019
- **HUANG et al.** *Adversarial Defence by Diversified Simultaneous Training of Deep Ensembles,* 2021